# EUROPEAN PATENT SPECIFICATION

(11) **EP 3 202 566 B1**
(45) Date of publication and mention of the grant of the patent: **15.04.2020**
(21) Application number: 15847938.6
(22) Date of filing: 30.09.2015
(51) Int. Cl.: B32B 27/10, B32B 27/32, E04F 13/07, B32B 7/12, B32B 27/06, B32B 27/30, B32B 29/00, B32B 5/24, D21H 25/06, D21H 27/20

(54) **LAMINATE SHEET AND FOAM LAMINATE SHEET, AND PRODUCTION METHOD AND APPLICATION METHOD FOR SAME**
LAMINATFOLIE UND SCHAUMSTOFFLAMINATFOLIE UND HERSTELLUNGSVERFAHREN UND ANWENDUNGSVERFAHREN
FEUILLE STRATIFIÉE ET FEUILLE STRATIFIÉE EN MOUSSE, ET PROCÉDÉ DE PRODUCTION ET PROCÉDÉ D'APPLICATION ASSOCIÉS

(30) Priority: 30.09.2014 JP 2014200959
(43) Date of publication of application: 09.08.2017
(73) Proprietor: Dai Nippon Printing Co., Ltd., Shinjuku-ku, Tokyo 162-8001 (JP)
(72) Inventor: NETSU, Yoshiaki, Tokyo 162-8001 (JP)
(74) Representative: Müller-Boré & Partner Patentanwälte PartG mbB
(86) International application number: PCT/JP2015/077850
(87) International publication number: WO 2016/052663

(56) References cited:
- EP-A2- 1 216 146
- WO-A1-2014/051047
- WO-A1-2014/051047
- JP-A- H09 193 309
- JP-A- H09 239 908
- JP-A- 2002 001 749
- JP-A- 2002 001 749
- JP-A- 2006 341 472
- JP-A- 2009 051 042
- JP-B2- S6 254 674

## Description

### Technical Field

The present invention relates to a laminated sheet and a foamed laminated sheet, methods for producing the sheets, and methods for applying the sheets.

The foamed laminated sheet comprises a foamed resin layer, and is useful as foamed wallpapers, various decorative materials. The laminated sheet refers to an unfoamed state of the foamed laminated sheet (i.e., a so-called unfoamed material), or a laminated sheet not comprising a foamed resin layer and being useful as various decorative materials.

### Background Art

Heretofore, it has been known that backing paper, prepared by mixing a pulp component with a synthetic resin and subjecting the mixture to papermaking, is used in combination with a methyl cellulose adhesive in order to apply a decorative material, such as wallpaper. For example, Patent Literature (PTL) 1 discloses "a wallpaper having a laminated structure comprising at least a backing paper and a decorating layer, wherein when the wallpaper is applied to a wall surface by using an adhesive and peeled off from the wall surface, the peeling occurs on or in the adhesive layer, the adhesive being a methyl cellulose-based adhesive, and the wallpaper having a peeling strength of 100 to 500 g/3 cm from the wall surface, the backing paper being obtained by mixing a pulp component and a synthetic resin component and subjecting the mixture to papermaking, the interlayer peeling strength of the backing paper being greater than the peeling strength of the wallpaper from the wall surface."

The backing paper prepared by mixing a pulp component and a synthetic resin component and subjecting the mixture to papermaking, enables application of a wallpaper comprising the backing paper after a wall surface as an application surface is coated with an adhesive, by utilizing its property of exhibiting less dimensional change when wet (less underwater elongation). This is advantageous because coating an application surface with an adhesive is easy even for general consumers. Further, it is advantageous in that a combination of a methyl cellulose adhesive with the backing paper allows peeling between the backing paper and the adhesive when an old wallpaper is replaced, and that there is less paper residue and less damage to the application surface as well as less influence on a new wallpaper to be applied.

In contrast, when using other types of backing paper, which have relatively high underwater elongation, the wallpaper must be adhered to an application surface after the backing paper is coated with an adhesive and allowed to stand until it becomes dimensionally stable. Since the wallpaper dimension may change even after the adhesion, joint clearance (opened gap) and/or protrusion of the wallpaper may occur after application. Furthermore, because a special adhesive coater is required to coat backing paper with an adhesive and it is also not easy to handle the wallpaper coated with an adhesive, professionals have been required to do the work.

As adhesives used for applying wallpaper, not only methyl cellulose adhesives but also starch adhesives (starch pastes and starch pastes mixed with synthetic resin) are generally used. However, when such a starch adhesive is used, its adhesive force between the backing paper and the adhesive is so strong that interlaminar peeling occurs when an old wallpaper is replaced, whereby the backing paper may remain on the application surface, or the application surface may be damaged.

Therefore, it has been desired that even when a combination other than a synthetic fiber-mixed paper and a methyl cellulose adhesive is used, a wallpaper can be easily applied after an application surface is coated with an adhesive and can also be peeled off between the backing paper and the adhesive when an old wallpaper or the like is replaced.

### Citation List

### Patent Literature

PTL 1: Japanese Patent No. 4205562

### Summary of Invention

### Technical Problem

An object of the present invention is to provide a novel laminated sheet and foamed laminated sheet (collectively referred to as "wallpaper". More specifically, the object of the present invention is to provide a wallpaper that can be easily applied after an application surface is coated with an adhesive and that can be peeled off between the backing paper and the adhesive during repapering, even when a combination other than a synthetic fiber-mixed paper and a methyl cellulose adhesive is used.

### Solution to Problem

The present inventors carried out extensive research. As a result, the inventors found that the above object can be achieved by using a fibrous base material comprising a crosslinked product of an ionizing radiation-crosslinking material as a backing paper for wallpaper or the like. The present invention has been accomplished based on this finding.

Specifically, the present invention provides the following laminated sheet, foamed laminated sheet, and methods for producing the sheets.
1. A laminated sheet comprising a fibrous base material and at least a resin layer on the fibrous base material, the fibrous base material comprising a crosslinked product of an ionizing radiation-crosslinking material.
2. The laminated sheet according to Item 1, wherein the resin layer is an olefin resin layer.
3. The laminated sheet according to Item 1 or 2, wherein the resin layer is a foaming-agent-containing resin layer, or a laminated layer comprising a foaming-agent-containing resin layer.
4. The laminated sheet according to Item 3, wherein the foaming-agent-containing resin layer has a non-foamed resin layer formed on one or both sides thereof.
5. The laminated sheet according to Item 3 or 4, wherein the resin of the foaming-agent-containing resin layer is crosslinked by irradiation with an electron beam.
6. A foamed laminated sheet obtained by foaming the foaming-agent-containing resin layer of the laminated sheet according to any one of Items 3 to 5.
7. A method for producing a laminated sheet, comprising performing the following steps (1) and (2) in any order:
   (1) forming at least a resin layer on a fibrous base material,
   (2) impregnating the fibrous base material with an ionizing radiation-crosslinking material; and then irradiating at least the fibrous base material with ionizing radiation to crosslink the ionizing radiation-crosslinking material, thus forming a crosslinked product.
8. The method according to Item 7, wherein at least the resin layer is formed on the fibrous base material through film formation by extrusion.
9. The method for producing the laminated sheet according to Item 7 or 8, wherein the resin layer is a foaming-agent-containing resin layer, or a laminated layer comprising a foaming-agent-containing resin layer, the ionizing radiation is an electron beam, and crosslinking of the ionizing radiation-crosslinking material and crosslinking of the resin of the foaming-agent-containing resin layer are simultaneously performed by irradiation with the electron beam.
10. A method for producing a foamed laminated sheet, comprising heating to foam a foaming-agent-containing resin layer of the laminated sheet produced by the production method according to any one of Items 7 to 9, the resin layer being a foaming-agent-containing resin layer or a laminated layer comprising a foaming-agent-containing resin layer.
11. An application method comprising adhering the laminated sheet or foamed laminated sheet according to any one of Items 1 to 6 to an application surface coated with an adhesive.
12. An application method comprising coating the back side of the laminated sheet or foamed laminated sheet according to any one of Items 1 to 6 with an adhesive and then adhering the sheet to an application surface.
13. The application method according to Item 11 or 12, wherein the application surface is a wall surface and/or a ceiling.

### Advantageous Effects of Invention

The laminated sheet of the present invention, which comprises a crosslinked product of an ionizing radiation-crosslinking material, has less underwater elongation (dimensional change), regardless of the type of fiber material of the fibrous base material. Therefore, the sheet can be easily applied to an application surface after the application surface is coated with an adhesive; furthermore, when repapering, the sheet can be peeled off between the fibrous base material and the adhesive, regardless of the type of adhesive used. These effects can be achieved by any of the laminated sheet and foamed laminated sheet of the present invention. Such a laminated sheet and a foamed laminated sheet of the present invention are highly advantageous in that general consumers can easily apply (adhere) the sheet and replace the sheet.

### Brief Description of Drawings

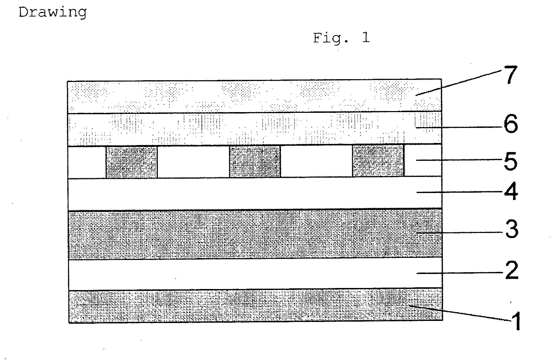

Fig. 1 is a cross-sectional schematic diagram illustrating a layer structure of a laminated sheet according to the present invention.

### Description of Embodiments

The laminated sheet, the foamed laminated sheet, the methods for producing these sheets, and the methods for applying these sheets according to the present invention are described below in detail.

### << Laminated sheet >>

Features of the laminated sheet of the present invention are that the laminated sheet comprises a fibrous base material and at least one resin layer laminated on the fibrous base material and that the fibrous base material comprises a crosslinked product of an ionizing radiation-crosslinking material.

The laminated sheet of the present invention having these features comprises a fibrous base material containing a crosslinked product of an ionizing radiation-crosslinked material. Accordingly, the laminated sheet has less underwater elongation (dimensional change) regardless of the type of fiber material of the fibrous base material. Therefore, the laminated sheet can be easily applied to an application surface after the application surface is coated with an adhesive. Furthermore, when repapering, the laminated sheet can be peeled off between the fibrous base material and the adhesive, regardless of the kind of adhesive used. This effect can be obtained by any of the laminated sheet and foamed laminated sheet of the present invention. Such a laminated sheet and foamed laminated sheet of the present invention are advantageous in that general consumers can easily apply (adhere) the sheet and replace the sheet with a new one.

Each layer constituting the laminated sheet of the present invention is described below. In the present specification, the direction or side where the resin layer is laminated, as viewed from the fibrous base material, is referred to as "above" or "the front surface," whereas the side opposite to the side where the resin layer is laminated, as viewed from the fibrous base material, is referred to as "below" or "the back surface."

### Fibrous base material

A fibrous base material comprising a crosslinked product of an ionizing radiation-crosslinking material is used as the fibrous base material. The crosslinked product of the ionizing radiation-crosslinking material is formed by impregnating a fibrous base material (in the form of a fibrous sheet) with an ionizing radiation-crosslinking material (impregnation includes various modes such as immersion, application, and spraying) and then irradiating the resulting base material with ionizing radiation.

Specific examples of the fibrous sheet include a general wallpaper base (one prepared by subjecting a sheet made mainly of pulp to a sizing treatment with a known sizing agent); a flame-retardant paper (one prepared by treating a sheet made "mainly of pulp with a flame retardant, such as guanidine sulfamate or guanidine phosphate); an inorganic paper containing an inorganic additive, such as aluminum hydroxide or magnesium hydroxide; a fine-quality paper; a thin paper; a synthetic fiber-mixed paper (one prepared by mixing a synthetic fiber and pulp and subjecting the mixture to papermaking).

Fibrous sheets usable in the present invention also include those classified as nonwoven fabrics. From the viewpoint of good adhesion to the resin layer, a general wallpaper base and flame-retardant paper are preferable among the fibrous sheets mentioned above as examples.

The basis weight of the fibrous sheet is not limited, and is preferably about 50 to 300 g/m², and more preferably about 50 to 130 g/m².

The ionizing radiation-crosslinking material is not particularly limited. Examples of usable ionizing radiation-crosslinking materials include compounds containing, as the main component, prepolymers (including oligomers) and/or monomers that contain, in the molecule, a cationically polymerizable functional group or a radically polymerizable unsaturated group that can undergo a crosslinking reaction (crosslinking polymerization reaction) by irradiation with ionizing radiation, such as ultraviolet rays or electron beams. Such prepolymers or monomers can be used singly or in a combination of two or more. In consideration of permeability to the fibrous base material, monomers having a relatively low viscosity are preferable.

Specific examples of the prepolymers or monomers are compounds that contain, in the molecule, a radically polymerizable unsaturated group, such as (meth)acryloyl or (meth)acryloyloxy; a cationically polymerizable functional group, such as epoxy. Further, polyene/thiol-based prepolymers prepared using a combination of polyene and polythiol are also preferable. In this specification, (meth)acryloyl means acryloyl or methacryloyl.

Examples of prepolymers containing a radically polymerizable unsaturated group include polyester (meth)acrylate, urethane (meth)acrylate, epoxy (meth)acrylate, melamine (meth)acrylate, triazine (meth)acrylate, silicone (meth)acrylate. It is usually preferable that such prepolymers have a molecular weight of about 250 to 100000.

Examples of monomers containing a radically polymerizable unsaturated group include monofunctional monomers, such as methyl(meth)acrylate, 2-ethylhexyl(meth)acrylate, and phenoxyethyl(meth)acrylate. Examples of multifunctional monomers include diethylene glycol di(meth)acrylate, propylene glycol di(meth)acrylate, neopentylglycol dimethacrylate, trimethylolpropane tri(meth)acrylate, trimethylolpropane ethylene oxide tri(meth)acrylate, dipentaerythritol tetra(meth)acrylate, dipentaerythritol penta(meth)acrylate, dipentaerythritol hexa(meth) acrylate.

Examples of prepolymers containing a cationically polymerizable functional group include prepolymers of epoxy-based resins, such as bisphenol-type epoxy resins and novolac-type epoxy compounds; and prepolymers of vinyl ether-based resins, such as fatty acid-based vinyl ethers and aromatic vinyl ethers. Examples of thiols include polythiols, such as trimethylolpropane trithioglycolate and pentaerythritol tetrathioglycolate. Examples of polyenes include polyurethanes prepared using diol and diisocyanate, wherein allyl alcohol is added to both ends of the polyurethane.

As the ionizing radiation-crosslinking material, a polyfunctional prepolymer or a polyfunctional monomer having two or more polymerizable functional groups in the molecule is preferably used as the prepolymer or monomer to promote a crosslinking reaction.

The ionizing radiation-crosslinking material may be a combination of such a prepolymer or monomer with one or more other materials. Examples of other materials to be used in combination with such a prepolymer or a monomer include acrylic resins, urethane resins, epoxy resins, polyester resins, and like resins commonly used as coating materials. When such a prepolymer or monomer is used in combination with these resins, the prepolymer or monomer may function as a crosslinking agent that crosslinks these resins.

Electromagnetic waves or charged particles having energy that can crosslink the molecule in the ionizing radiation-crossslinking material are used as the ionizing radiation for crosslinking the ionizing radiation-crosslinking material. Ultraviolet rays or electron beams may usually be used, and visible light, X-rays, ionic rays, may also be used.

Examples of ultraviolet ray sources include light sources, such as ultra-high pressure mercury lamps, high-pressure mercury lamps, low-pressure mercury lamps, carbon arc lamps, black lights, and metal halide lamps. It is usually preferable that the wavelength of the ultraviolet rays be 190 to 380 nm.

Examples of electron beam sources include various electron beam accelerators, such as a Cockcroft-Walton accelerator, Van de Graaff accelerator, resonance transformer accelerators, insulation-core-transformer-type accelerators, linear accelerators, dynamitron accelerators, and high-frequency accelerators. Among these, electron beam sources capable of irradiating electrons with an energy of 100 to 1000 keV, preferably 100 to 300 keV, are preferable.

The density of the fibrous material containing a crosslinked product of an ionizing radiation-crosslinking material varies depending on the type of fibrous base material before containing a crosslined product and the content of the crosslinked product. When a fibrous sheet with a basis weight of about 65 g/m² is used, the fibrous base material containing a crosslinked product has a density of about 0.60 to 0.65 g/cm³. When inorganic paper containing an inorganic additive, such as aluminum hydroxide, is used, the density is about 1.0 g/cm³. Further, the fibrous material containing a crosslinked product has an interlaminar strength of about 0.25 to 3.8 N/(3 cm width) when a fibrous sheet with a weight of about 65 g/m² is used.

### Resin layer

The laminated sheet of the present invention comprises a fibrous base material and at least one resin layer laminated on the fibrous base material. The resin layer can be formed by a known film-forming method, such as a T die film-forming method or a calender film-forming method.

A wide variety of resins conventionally used in wall coverings, such as vinyl chloride resin and olefin resins, can be used as a resin component contained in the resin layer. Since a plastitizer may bleed over time with the use of vinyl chloride resin, olefin resins are more preferable than vinyl chloride resin from the viewpoint of enhancing the durability of the laminated sheet. More specifically, ethylene resins are preferable.

Examples of ethylene resins include polyethylenes (PE) and ethyelene copolymers comprising ethylene and a component other than ethyelene (hereinafter abbreviated as "ethylene copolymers").

Examples of usable polyethylenes include a wide variety of polyethylenes, such as low-density polyethylene (LDPE), medium-density polyethylene (MDPE), high-density polyethylene (HDPE), and linear low-density polyethylene (LLDPE).

In view of the melting point and MFR, ethylene copolymers are suitable for use in film formation by extrusion. Examples of ethylene copolymers include ethylene-vinylacetate copolymer (EVA), ethylene-methyl methacrylate copolymer (EMMA), ethylene-acrylic acid copolymer (EAA), ethylene-ethyl acrylate copolymer (EEA), ethylene-methyl acrylate copolymer (EMA), ethylene-methacrylic acid copolymer (EMAA), ethylene-a olefin copolymer. These ethylene copolymers can be used singly or in a combination of two or more. Among these, ethylene copolymers, ethylene-vinylacetate copolymers, and ethylene-methyl methacrylate copolymers are particularly preferable. When one of these copolymers and at least one of other resins are used in combination, the ethylene-vinylacetate copolymer content and the ethylene-methyl methacrylate copolymer content are each preferably 70 wt.% or more, and more preferably 80 wt.% or more.

The content of monomers other than ethylene in the ethylenic copolymer is preferably 5 to 25 wt.%, and more preferably 9 to 20 wt.%. Using such a copolymerization ratio enhances film formability by extrusion. For example, the ethylene vinylacetate copolymer preferably has a copolymerization ratio of vinyl acetate (VA amount) of 9 to 25 wt.%, and more preferably 9 to 20 wt.%. The ethylene-methyl methacrylate copolymer preferably has a copolymerization ratio of methyl methacrylate (MMA amount) of 5 to 25 wt.%, and more preferably 5 to 15 wt.%. The ethylene-methacrylic acid copolymer preferably has a copolymerization ratio of acrylic acid (MAA amount) of 2 to 15 mass%, and more preferably 5 to 11 mass%.

The resin component contained in the resin layer of the present invention preferably has a melt flow rate (MFR) of 10 to 40 g/10 min as measured under the conditions of a temperature of 190°C and a load of 21.18N in accordance with JIS K6922, although it may vary depending on the film formation method used. When the MFR falls within the above range, the resin layer can be formed into a film by extrusion with little increase in temperature, and a film can be obtained in a non-foamed state. Therefore, if a picture pattern layer is formed in a later step, printing can be formed on a smooth surface, with few pattern defects. When the MFR is unduly large, the resin becomes undesirably soft, which may cause insufficient scratch resistance in the resulting resin layer.

In the present invention, the resin layer may be a foaming-agent-containing resin layer or a laminated layer comprising a foaming-agent-containing resin layer. In these cases, the obtained laminated sheet means a so-called roll of sheet comprising a foaming-agent-containing resin layer. The foamed laminated sheet of the present invention is obtained by foaming the foaming-agent-containing resin layer.

For example, a resin composition containing the resin component as well as an inorganic filler, a pigment, a thermal decomposition-type foaming agent, a foaming aid, a crosslinking aid, can be preferably used as the resin composition that forms the foaming-agent-containing resin layer. In addition to these components, a stabilizer, a lubricant, can also be used as additives.

Examples of the thermal decomposition-type foaming agent include azo-based foaming agents, such as azodicarbonamide (ADCA) and azobisformamide; and hydrazide-based foaming agents, such as oxybenzene sulfonylhydrazide (OBSH) and paratoluenesulfonyl hydrazide. The amount of the thermal decomposition-type foaming agent may be suitably selected according to the type of foaming agent, expansion ratio, and other factors. The foaming expansion ratio is seven times or more, preferably about seven to ten times. The amount of the thermal decomposition-type foaming agent is preferably about 1 to 20 parts by mass per 100 parts by mass of the resin component.

As the foaming aid, metal oxides and/or fatty acid metal salts are preferable. Examples of usable foaming aids include zinc stearate, calcium stearate, magnesium stearate, zinc octoate, calcium octoate, magnesium octoate, zinc laurate, calcium laurate, magnesium laurate, zinc oxide, magnesium oxide. The amount of the foaming aid is preferably about 0.3 to 10 parts by mass, and more preferably about 1 to 5 parts by mass, per 100 parts by mass of the resin component.

When such a foaming aid is used in combination with EMAA and an ADCA foaming agent, the effect as a foaming aid may be impaired by a reaction of the acrylic acid moiety of EMAA with a metal foaming aid. Accordingly, when EMAA and an ADCA foaming agent are used in combination, a carboxylic acid hydrazide compound is preferably used as a foaming aid, as described in JP2009-197219A. In this case, the carboxylic acid hydrazide compound is preferably used in an amount of about 0.2 to 1 part by mass per part by mass of the ADCA foaming agent.

Examples of usable inorganic fillers include calcium carbonate, aluminum hydroxide, magnesium hydroxide, antimony trioxide, zinc borate, molybdenum compounds, and the like. Effects such as gap control, surface property improvement, and heat generation control on combustion, can be imparted by incorporating an inorganic filler. The amount of the inorganic filler is preferably about 0 to 100 parts by mass, and more preferably 20 to 70 parts by mass, per 100 parts by mass of the resin component.

As for pigments, examples of inorganic pigments include titanium oxide, zinc flower, carbon black, black iron oxide, yellow iron oxide, chrome yellow, molybdate orange, cadmium yellow, nickel titan yellow, chromium titan yellow, iron oxide (red iron oxide), cadmium red, ultramarine blue, Prussian blue, cobalt blue, chrome oxide, cobalt green, aluminum powder, bronze powder, mica titan, zinc sulfide. Examples of organic pigments include aniline black, perylene black, azo-based pigments (e.g., azo lake, insoluble azo, and condensed azo), polycyclic pigments (e.g., isoindolinone, isoindoline, quinophthalone, perinone, flavanthrone, anthrapyrimidine, anthraquinone, quinacridone, perylene, diketopyrrolopyrrole, dibromoanthanthrone, dioxazine, thioindigo, phthalocyanine, indanthrone, and halogenated phthalocyanine). The pigment content is preferably about 10 to 50 parts by mass, and more preferably 15 to 30 parts by mass, per 100 parts by mass of the resin component.

In the present invention, the resin of the foaming-agent-containing resin layer may be crosslinked by irradiation with an electron beam. The method for irradiating the foaming-agent-containing resin layer with an electron beam and the foaming method may be performed according to the methods described below in the section "Production Method." In the present invention, in particular, when the ionizing radiation with which the fibrous base material is irradiated is an electron beam, crosslinking of the ionizing radiation-crosslinking material and crosslinking of the resin of the foaming-agent-containing resin layer may be performed simultaneously.

Further, in the present invention, the resin layer may be a resin layer on which a picture is formed and that is different from a picture pattern layer. Usable pigments and resins may be the same as those usable in the picture pattern layer described below. The resin layer may comprise an ionizing radiation-curable resin, a thermosetting resin (including, for example, a room temperature curable resin and a two-component reaction curable resin).

The resin layer (which may be a single layer or a multiple layer) preferably has a thickness of about 40 to 200 µm. When the resin layer is a foaming-agent-containing resin layer or a laminated layer comprising a foaming-agent-containing resin layer, the foamed resin layer (which may be a single layer or a multiple layer) preferably has a thickness of about 300 to 1000 µm.

### Non-foamed resin layers A and B

The foaming-agent-containing resin layer may have a non-foamed resin layer formed on one side or both sides of the foaming-agent-containing resin layer.

For example, a non-foamed resin layer B (adhesive resin layer) may be formed on the back surface of the foaming-agent-containing resin layer (the side on which the fibrous base material is laminated) for the purpose of increasing the adhesive force to the fibrous base material.

The resin component of the adhesive resin layer is not particularly limited, and an ethylene-vinyl acetate copolymer (EVA) is preferable. Known or commercially available EVA can be used. In particular, EVA with an acetic acid vinyl component (VA component) content of 10 to 46 mass% is preferable, and EVA with an acetic acid vinyl component content of 15 to 41 mass% is more preferable.

Although the thickness of the adhesive resin layer is not limited, it is preferably about 3 to 50 µm, and more preferably about 5 to 20 µm.

A non-foamed resin layer A may be formed on the upper side of the foaming-agent-containing resin layer for the purpose of making the picture pattern clear when a picture pattern layer is formed, and improving the scratch resistance of the foamed resin layer.

Examples of the resin component of the non-foamed resin layer A include polyolefin resins, methacrylic resins, thermoplastic polyester resins, polyvinyl alcohol resins, fluorine resins. Of these, polyolefin resins are preferable.

Examples of polyolefin resins include at least one member selected from resins prepared using one type of monomer, such as polyethylene (low-density polyethylene (LDPE) or high-density polyethylene (HDPE)), polypropylene, polybutene, polybutadiene, and polyisoprene; copolymers of ethylene and α-olefin having 4 or more carbon atoms (linear low-density polyethylenes); ethylene (meth)acrylic acid copolymers such as ethylene-acrylic acid copolymers, ethylene-methyl acrylate copolymers, ethylene-ethyl acrylate copolymers, and ethylene methacrylic acid copolymers; ethylene-vinyl acetate copolymers (EVA); saponified products of ethylene-vinyl acetate copolymers; ethylene-vinyl alcohol copolymers; ionomers. In the present invention, when a vinyl chloride resin is used as a resin in the foaming-agent-containing resin layer, a non-foamed resin layer A (in particular, an ethylene-vinyl alcohol copolymer layer) is preferably formed in order to impart durability to a laminated sheet. The term "(meth)acrylic" as used herein refers to acrylic or methacrylic. The same applies to the other portions referred to as "meth."

Although the thickness of the non-foamed resin layer A is not limited, it is preferably about 2 to 50 µm, and particularly preferably about 5 to 20 µm.

In the present invention, an embodiment wherein the non-foamed resin layer B, foaming-agent-containing resin layer, and non-foamed resin layer A are formed in this order is also preferable from the viewpoint of production, which is described below.

### Picture pattern layer

If necessary, the laminated sheet of the present invention may comprise a picture pattern layer formed on a resin layer (e.g., a foaming-agent-containing resin layer, non-foamed resin layer A) or on a primer layer described below.

The picture pattern layer gives a design to a laminated sheet or a foamed laminated sheet. Examples of usable picture patterns include wood grain patterns, marble grain patterns, pebble patterns, tiled patterns, brick-masonry patterns, textile patterns, tie-dyed leather patterns, geometric figures, characters, symbols, abstraction patterns, flower patterns. A suitable picture pattern layer can be selected according to the purpose.

The picture pattern layer may be formed, for example, by printing a picture pattern. Examples of printing methods include gravure printing, flexo printing, silk screen printing, offset printing. Usable printing inks include those that comprise a colorant, a binder resin, and a solvent. These inks may be known or commercially available ones.

As the colorant, for example, pigments used for the foaming-agent-containing resin layer can be used.

The binder resin can be suitably selected according to the type of substrate on which a picture pattern layer is formed. Examples of binder resins include acrylic resins, styrene resins, polyester resins, urethane resins, chlorinated polyolefin resins, vinyl chloride-vinyl acetate copolymer resins, polyvinyl butyral resins, alkyd resins, petroleum resins, ketone resins, epoxy resins, melamine resins, fluorine resins, silicone resins, cellulose derivatives, rubber resins.

Examples of the solvent (or dispersion medium) include petroleum-based organic solvents, such as hexane, heptane, octane, toluene, xylene, ethylbenzene, cyclohexane, and methylcyclohexane; ester-based organic solvents, such as ethyl acetate, butyl acetate, 2-methoxyethyl acetate, and 2-ethoxyethyl acetate; alcohol-based organic solvents, such as methyl alcohol, ethyl alcohol, normal propyl alcohol, isopropyl alcohol, isobutyl alcohol, ethylene glycol, and propylene glycol; ketone-based organic solvents, such as acetone, methyl ethyl ketone, methyl isobutyl ketone, and cyclohexanone; ether-based organic solvents, such as diethyl ether, dioxane, and tetrahydrofuran; chlorine-based organic solvents, such as dichloromethane, carbon tetrachloride, trichloroethylene, and tetrachloroethylene; water. These solvents (or dispersion media) can be used singly, or in a mixed state.

The thickness of the picture pattern layer varies depending on the type of picture pattern. In general, about 0.1 to 10 µm is preferable.

### Primer Layer

If necessary, a primer layer may be formed on a resin layer (e.g., a foaming-agent-containing resin layer, non-foamed resin layer A) or on a picture pattern layer.

Examples of resins that can be contained in the primer layer include acrylic resins, polyvinyl chloride-vinyl acetate copolymers, polyester, polyurethane, chlorinated polypropylene, chlorinated polyethylene. Acrylic resins, chlorinated polypropylene, are preferable.

Examples of acrylic resins include acrylic resins comprising homopolymers or copolymers of (meth)acrylic acid esters, such as polymethyl (meth)acrylates, polyethyl (meth)acrylates, polypropyl (meth)acrylates, polybutyl (meth)acrylates, methyl (meth)acrylate-butyl (meth)acrylate copolymers, ethyl (meth)acrylate-butyl (meth)acrylate copolymers, ethylene-methyl (meth)acrylate copolymers, styrene-methyl (meth)acrylate copolymers.

The polyurethane is a composition containing a polyol (polyhydric alcohol) as a main component and an isocyanate as a crosslinking agent (curing agent).

Examples of usable polyols include compounds having two or more hydroxyl groups in one molecule. Specific examples include polyethylene glycol, polypropylene glycol, acrylic polyol, polyester polyol, polyether polyol.

Examples of usable isocyanates include polyvalent isocyanates having two or more isocyanate groups in one molecule. Specific examples include aromatic isocyanates, such as 2,4-tolylene diisocyanate, xylene diisocyanate, and 4,4-diphenylmethane diisocyanate; and aliphatic (or alicyclic) isocyanates, such as hexamethylene diisocyanate, isophorone diisocyanate, hydrogenated tolylene diisocyanate, and hydrogenated diphenylmethane diisocyanate.

The thickness of the primer layer is not limited, and about 0.1 to 10 µm is preferable and about 0.1 to 5 µm is more preferable.

### Surface protective layer

A surface protective layer may be formed on the surface of a resin layer (e.g., a foaming-agent-containing resin layer, non-foamed resin layer A), a picture pattern layer, or a primer layer for luster control and/or picture pattern protection purposes.

The type of surface protective layer is not limited. The surface protective layer for luster control may be, for example, a surface protective layer containing a known filler, such as silica. The surface protective layer can be formed by a known method, such as gravure printing.

To form the surface protective layer for the purpose of enhancing surface strength (scratch resistance) and stain resistance of the laminated sheet and protecting a picture pattern layer, a surface protective layer containing an ionizing radiation-curable resin as a resin component is preferably used. The ionizing radiation-curable resin is preferably a resin that is radically polymerized (cured) by irradiation with an electron beam.

### Embossing

An embossed pattern may be formed on the front surface of the laminated sheet or foamed laminated sheet. In this case, embossing can be performed from above the uppermost surface layer (the side opposite to the fibrous sheet). Embossing can be performed by a known means, such as pressing an embossing plate. For example, when the uppermost surface layer is a surface protective layer, the front surface is softened by heating, and an embossing plate is pressed thereon to form a desired embossed pattern. Examples of the embossed pattern include wood grain vessel channel patterns, stone sheet surface concave-convex patterns, textile surface texture patterns, mat patterns, grain patterns, hairline patterns, geometric patterns, linear streak patterns, contour patterns.

### << Foamed laminated sheet >>

The foamed laminated sheet of the present invention can be obtained by foaming the foaming-agent-containing resin layer of the laminated sheet.

### <<Method for producing the laminated sheet and foamed laminated sheet>>

The method for producing the laminated sheet of the present invention is not limited. For example, the laminated sheet can be produced by a method comprising performing the following steps (1) and (2) in any order:
(1) forming at least a resin layer on a fibrous base material,
(2) impregnating the fibrous base material with an ionizing radiation-crosslinking material; and then irradiating at least the fibrous base material with ionizing radiation to crosslink the ionizing radiation-crosslinking material, thus forming a crosslinked product.

More specifically, the above production method comprises forming a resin layer on a fibrous base material (which may be a fibrous base material containing a crosslinked product or a fibrous base material in the form of a fibrous sheet); and impregnating a fibrous base material (a fibrous base material not containing a crosslinked product) with an ionizing radiation-crosslinking material; and after performing these steps, irradiating at least the fibrous base material with ionizing radiation to crosslink the ionizing radiation-crosslinking material, thus forming a crosslinked product. The resin layer is preferably formed into a film by extrusion.

In the above production method, the order of performing steps (1) and (2) is not limited. When the resin layer is formed by extrusion, step (2) is preferably performed after step (1) from the viewpoint of laminating the resin layer on the fibrous base material with good adhesion.

When a resin layer is laminated on a fibrous base material by forming the resin layer by extrusion, the use of a synthetic fiber-mixed paper or a non-woven fabric as the fibrous base material may cause difficulty in laminating the resin layer on the fibrous base material with good adhesion. In contrast, when the laminated sheet and the production method according to the present invention are used, even when a fibrous base material, other than synthetic fiber-mixed paper and non-woven fabric, having good adhesion to the resin layer is used, application of the sheet to an application surface after the application surface is coated with an adhesive as well as peeling between the fibrous base material and adhesive when repapering can be made, thus achieving both good adhesion between the fibrous base material and the resin layer and ease of application and repapering.

The method for impregnating the fibrous base material with an ionizing radiation-crosslinking material in step (2) is not particularly limited. Examples of usable methods include a method of applying an ionizing radiation-crosslinking material to a fibrous base material (on the side opposite to the side where a resin layer has been formed if step (1) is performed before step (2)); a method of impregnating a fibrous base material with an ionizing radiation-crosslinking material. The ionizing radiation-crosslinking material may be diluted with a solvent, if necessary.

The resin layer may comprise a laminate comprising a foaming-agent-containing resin layer. When a non-foamed resin layer is formed on one side or both sides of the foaming-agent-containing resin layer, a non-foamed resin layer B and/or a non-foamed resin layer A may be formed through film formation by extrusion or by thermally laminating each film. Film formation by co-extrusion using a T-die extruder is preferable. For example, when a non-foamed resin layer is formed on both sides, a multi-manifold T-die, which is capable of simultaneously forming three layers by co-extruding molten resins corresponding to the three layers, can be used.

When the resin composition for forming the foaming-agent-containing resin layer contains an inorganic filler, and when the foaming-agent-containing resin layer is formed through film formation by extrusion, residue (so-called die drool) of the inorganic filler is likely to develop at the extrusion port (so-called die) of the extruder, which is likely to become foreign matter on the surface of the foaming-agent-containing resin layer. Accordingly, when the inorganic filler is contained in the resin composition for forming the foaming-agent-containing resin layer, it is preferable to form the three layers by co-extrusion as described above. Specifically, the occurrence of die drool can be suppressed by co-extruding the layers in a manner such that the foaming-agent-containing resin layer is sandwiched between non-foamed resin layers.

After the formation of the foaming-agent-containing resin layer, electron beam irradiation may be performed, whereby the resin components can be crosslinked to adjust the surface strength, foamability, of the foamed resin layer. The energy of the electron beam is preferably about 150 to 250 kV, and more preferably about 175 to 200 kV. The irradiation amount is preferably about 10 to 100 kGy, and more preferably about 10 to 50 kGy. A known electron beam irradiation device can be used as an electron beam source. In particular, when the ionizing radiation with which a fibrous base material is irradiated is an electron beam, crosslinking of the ionizing radiation-crosslinking material and crosslinking of the resin of the foaming-agent-containing resin layer can be performed simultaneously.

If necessary, a picture pattern layer and a primer layer may be formed in any order on the foaming-agent-containing resin layer, and then, if necessary, a surface-protective layer may be formed to obtain a laminated sheet. Subsequently, a heat treatment is performed to convert the foaming-agent-containing resin layer to a foamed resin layer, thus obtaining a formed laminated layer sheet. Fig. 1 illustrates a layer structure of a laminated sheet comprising a non-foamed resin layer B, a foaming-agent-containing resin layer, a non-foamed resin layer A, a picture pattern layer, a primer layer, and a surface-protective layer formed in this order on a fibrous base material. These layers can be laminated by combining printing, application, and like coating, film formation by extrusion. Printing, application, and like coating can be performed according to a usual method.

The heat treatment conditions are not limited as long as a foamed resin layer is formed by decomposition of a heat decomposition-type foaming agent. The heating temperature is preferably about 210 to 240°C, and the heating time is preferably about 25 to 80 seconds. When an embossed pattern is impressed, embossing can be performed by a known means, such as pressing an embossing plate.

### << Method for applying the laminated sheet and the foamed laminated sheet >>

The laminated sheet and foamed laminated sheet of the present invention can be applied by adhering the sheet to an application surface after the application surface is coated with an adhesive as described above. The application surface to which the laminated sheet and the foamed laminated sheet are applied is not particularly limited. Surfaces for various purposes where decoration is required can be used. Examples of preferable application surfaces include wall surfaces and/or ceilings. That is, the laminated sheet and the foamed laminated sheet of the present invention are particularly useful as wallpapers and/or ceiling materials.

The adhesive for use in the application of the laminated sheet and the foamed laminated sheet of the present invention is not particularly limited. Conventional adhesives, such as starch adhesives (e.g., starch pastes and starch pastes having a synthetic resin added thereto) and methyl cellulose adhesives, can be selectively used according to the type of application surface. As described above, even when an adhesive other than methyl cellulose adhesives, for example, a starch adhesive commonly used in application of wallpaper or a ceiling material is used, the laminated sheet and the foamed laminated sheet of the present invention can be peeled off between the fibrous base material and the adhesive when repapering, thus allowing easy repapering with less likelihood of fibrous base material residue remaining on the application surface.

The method for applying the laminated sheet and the foamed laminated sheet of the present invention is not limited to the above application methods. Alternatively, it is also possible to apply the laminated sheet and the foamed laminated sheet by a general method in which after the back side of the laminated sheet or the foamed laminated sheet (the back side of the fibrous base material) is coated with an adhesive, the laminated sheet or the foamed laminated sheet is applied to an application surface.

### Examples

The present invention is described below in more detail with reference to Examples and Comparative Examples.

### Example 1

A multi-manifold T-die extruder for forming three layers from three types of materials was used to form a film comprising a stack of i) a non-foamed resin layer B with a thickness of 7 µm, ii) a foaming-agent-containing resin layer with a thickness of 70 µm, and iii) a non-foamed resin layer A with a thickness of 7 µm in this order. The extrusion conditions were such that the cylinder temperature for the resin of the layer i) was 100°C, the cylinder temperature for the resin composition of the layer ii) was 120°C, and the cylinder temperature for the resin composition of the layer iii) was 130°C. The die temperature for the layers was all 120°C.

After forming the film, the layer i) was laminated on standard backing paper (WK-665DO, produced by KJ Specialty Paper Co. Ltd.) having a surface temperature heated to 120°C. Immediately after the lamination, the laminate was impregnated with an ionizing radiation-crosslinking material (NK Ester ADCP, produced by Shin-nakamura Chemical Co., Ltd.) from the backing paper side by coating.

Next, the ionizing radiation-crosslinking material impregnated into the laminate was crosslinked by irradiation with an electron beam (200 kV, 30 kGy) from the layer iii) side and the resin of at least the foaming-agent-containing resin layer ii) was simultaneously crosslinked to prepare a laminated sheet.

A corona discharge treatment was then applied to the layer iii).

Next, an EVA-based aqueous emulsion was applied as a primer treatment by using a photogravure press to form a coating having a thickness of 2 g/m². After a textile pattern was printed by a photogravure press using a patterning aqueous ink ("Hydric," produced by Dainichiseika Colour & Chemicals Mfg. Co., Ltd.) and an aqueous ink for protective layers ("ALTOP," produced by Dainichiseika Colour & Chemicals Mfg.) to form a picture pattern layer, a protective layer was sequentially formed. In this manner, a laminated sheet (an unfoamed material) comprising a stack of a fibrous base material layer (standard backing paper), a non-foamed resin layer B, a foaming-agent-containing resin layer, a non-foamed resin layer A, a primer layer, a picture pattern layer, and a protective layer formed in this order was obtained.

Next, the laminated sheet was heated using a gear oven (220°C x 30 seconds) to foam a foaming agent contained in the foaming-agent-containing resin layer. Further, a textile pattern was embossed from the uppermost surface of the foamed laminate, thus obtaining a foamed laminated sheet (foamed wallpaper).

Each layer was formed by using the following components.
i) The non-foamed resin layer B was formed using EVA (Eve FREX EV150 (VA content = 33 wt.%) produced by Du Pont-Mitsui Polychemicals Co., Ltd.).
ii) The foaming-agent-containing resin layer was formed by using 100 parts by weight of EVA (Evatate H4011 (VA content = 20 wt.%), produced by Sumitomo Chemical Co., Ltd.), 30 parts by weight of calcium carbonate (Whiten H, produced by Toyo Fine Chemical Co., Ltd.), 25 parts by weight of titanium dioxide (CR-63, produced by Ishimara Sangyo Kaisha Ltd.), 4 parts by weight of a foaming agent (Vinyfor AC#3, produced by Eiwa Chemical Ind. Co., Ltd.), 4 parts by weight of a foaming aid (Efco-Chem ZNS-P, produced by Adeka Corporation), and 1 part by weight of a crosslinking aid (Opstar JUA 702, produced by JSR Corporation).
iii) The non-foamed resin layer A was formed using an ethylene-methacrylic acid copolymer resin (Nucrel N1560, produced by Du Pont-Mitsui Polychemicals Co., Ltd.).

### Comparative Example 1

A laminated sheet and a foamed laminated sheet were produced in the same manner as in Example 1 except that the backing paper was not impregnated with an ionizing radiation-crosslinking material.

### Comparative Example 2

A laminated sheet and a foamed laminated sheet were produced in the same manner as in Example 1 except that fleece paper (produced by Ahlstrom) produced by mixing pulp and synthetic fiber and subjecting the mixture to papermaking was used as backing paper and the backing paper was not impregnated with an ionizing radiation-crosslinking material.

### Test Example 1

The adhesion between the resin layer and the backing paper was evaluated by peeling off the resin layer of the foamed laminated sheet from the backing paper in the width direction. The evaluation criteria are as follows.
A: The resin layer carried the fibers of the backing paper over the entire width.
B: The resin layer partially carried the fibers of the backing paper.
C: The resin layer did not carry the fibers of the backing paper at all.

### Test Example 2

The underwater elongation of each foamed laminated sheet was evaluated. Specifically, each foamed laminated sheet was cut to a size of 5 cm in the MD direction and 11 cm in the TD direction. A gauge line with a length of 10 cm was drawn from the center in the MD direction to the entire width in the TD direction. The foamed laminated sheet sample was immersed in water for 1 hour to determine the percentage of change from the difference in gauge line length before and after the immersion. The evaluation criteria for the underwater elongation are as follows.
A: Less than 0.6%.
C: 0.6% or more.

### Test Example 3

Plaster board surfaces were coated with adhesives prepared beforehand by dissolving each of the following adhesives in a predetermined amount of water: (1) a methyl cellulose adhesive (Metylan Special, produced by Henkel) and (2) a starch adhesive (starch + synthetic resin) (Rua Mild, produced by Yayoi Chemical Industry). The backing paper surface of each foamed laminated sheet was adhered to the coated board surface and dried to prepare each test sample. An incision with a width of 25 mm was made on each test sample. Each laminated sheet was peeled off by hand to observe the peeled surface. The evaluation criteria are as follows.
A: The laminated sheet was peeled off between the backing paper and the adhesive with no backing paper remaining on the board surface.
B: The backing paper partially remained on the adhesive side; peeling was heavy.
C^{*1}: Due to interlaminar peeling of the backing paper, the backing paper remained on the plaster board substrate side.
C^{*2}: The plaster board substrate was peeled off.

**Table 1**

| | | Example 1 | Comparative Example 1 | Comparative Example 2 |
|---|---|---|---|---|
| Test Example 1 | | A | A | C |
| Test Example 2 | | A | C | A |
| Test Example 3 | (1) Methyl cellulose | A | C^{*1} | A |
| | (2) Starch | A | C^{*1} | C^{*2} |

### Description of the Reference Numerals

- 1.: Fibrous base material
- 2.: Non-foamed resin layer B
- 3.: Foaming-agent-containing resin layer
- 4.: Non-foamed resin layer A
- 5.: Picture pattern layer
- 6.: Primer layer
- 7.: Surface protective layer

## Claims

1. A laminated sheet comprising a fibrous base material and at least a resin layer on the fibrous base material, the fibrous base material comprising a crosslinked product of an ionizing radiation-crosslinking material.

2. The laminated sheet according to claim 1, wherein the resin layer is an olefin resin layer.

3. The laminated sheet according to claim 1 or 2, wherein the resin layer is a foaming-agent-containing resin layer, or a laminated layer comprising a foaming-agent-containing resin layer.

4. The laminated sheet according to claim 3, wherein the foaming-agent-containing resin layer has a non-foamed resin layer formed on one or both sides thereof.

5. The laminated sheet according to claim 3 or 4, wherein the resin of the foaming-agent-containing resin layer is crosslinked by irradiation with an electron beam.

6. A foamed laminated sheet obtained by foaming the foaming-agent-containing resin layer of the laminated sheet according to any one of claims 3 to 5.

7. A method for producing a laminated sheet, comprising performing the following steps (1) and (2) in any order:
(1) forming at least a resin layer on a fibrous base material,
(2) impregnating the fibrous base material with an ionizing radiation-crosslinking material; and then irradiating at least the fibrous base material with ionizing radiation to crosslink the ionizing radiation-crosslinking material, thus forming a crosslinked product.

8. The method according to claim 7, wherein at least the resin layer is formed on the fibrous base material through film formation by extrusion.

9. The method for producing the laminated sheet according to claim 7 or 8, wherein the resin layer is a foaming-agent-containing resin layer, or a laminated layer comprising a foaming-agent-containing resin layer, the ionizing radiation is an electron beam, and crosslinking of the ionizing radiation-crosslinking material and crosslinking of the resin of the foaming-agent-containing resin layer are simultaneously performed by irradiation with the electron beam.

10. A method for producing a foamed laminated sheet, comprising heating to foam a foaming-agent-containing resin layer of the laminated sheet produced by the production method according to any one of claims 7 to 9, the resin layer being a foaming-agent-containing resin layer or a laminated layer comprising a foaming-agent-containing resin layer.

11. An application method comprising adhering the laminated sheet or foamed laminated sheet according to any one of claims 1 to 6 to an application surface coated with an adhesive.

12. An application method comprising coating the back side of the laminated sheet or foamed laminated sheet according to any one of claims 1 to 6 with an adhesive and then adhering the sheet to an application surface.

13. The application method according to claim 11 or 12, wherein the application surface is a wall surface and/or a ceiling.

## Patentansprüche

1. Laminatfolie, umfassend ein faserförmiges Basismaterial und mindestens eine Harzschicht auf dem faserförmigen Basismaterial, wobei das faserförmige Basismaterial ein vernetztes Produkt eines durch ionisierende Strahlung vernetzenden Materials umfasst.

2. Laminatfolie nach Anspruch 1, wobei die Harzschicht eine Olefinharzschicht ist.

3. Laminatfolie nach Anspruch 1 oder 2, wobei die Harzschicht eine aufschäumungsmittelhaltige Harzschicht oder eine laminierte Schicht, die eine aufschäumungsmittelhaltige Harzschicht umfasst, ist.

4. Laminatfolie nach Anspruch 3, wobei die aufschäumungsmittelhaltige Harzschicht eine nicht aufgeschäumte Harzschicht, gebildet auf einer oder beiden Seiten davon, aufweist.

5. Laminatfolie nach Anspruch 3 oder 4, wobei das Harz der aufschäumungsmittelhaltigen Harzschicht durch Bestrahlung mit einem Elektronenstrahl vernetzt ist.

6. Aufgeschäumte Laminatfolie, erhalten durch Aufschäumen der aufschäumungsmittelhaltigen Harzschicht der Laminatfolie nach einem der Ansprüche 3 bis 5.

7. Verfahren zum Herstellen einer Laminatfolie, umfassend das Durchführen der folgenden Schritte (1) und (2) in beliebiger Reihenfolge:
(1) Bilden mindestens einer Harzschicht auf einem faserförmigen Basismaterial,
(2) Imprägnieren des faserförmigen Basismaterials mit einem durch ionisierende Strahlung vernetzenden Material; und dann
Bestrahlen mindestens des faserförmigen Basismaterials mit ionisierender Strahlung zum Vernetzen des durch ionisierende Strahlung vernetzenden Materials, wodurch ein vernetztes Produkt gebildet wird.

8. Verfahren nach Anspruch 7, wobei mindestens die Harzschicht auf dem faserförmigen Basismaterial mittels Filmbildung durch Extrusion gebildet wird.

9. Verfahren zum Herstellen der Laminatfolie nach Anspruch 7 oder 8, wobei die Harzschicht eine aufschäumungsmittelhaltige Harzschicht oder eine laminierte Schicht, umfassend eine aufschäumungsmittelhaltige Harzschicht, ist, die ionisierende Strahlung ein Elektronenstrahl ist und das Vernetzen des durch ionisierende Strahlung vernetzenden Materials und das Vernetzen des Harzes der aufschäumungsmittelhaltigen Harzschicht gleichzeitig durch Bestrahlung mit dem Elektronenstrahl durchgeführt werden.

10. Verfahren zum Herstellen einer geschäumten Laminatfolie, umfassend das Erwärmen zum Aufschäumen einer aufschäumungsmittelhaltigen Harzschicht der Laminatfolie, hergestellt durch das Herstellungsverfahren nach einem der Ansprüche 7 bis 9, wobei die Harzschicht eine aufschäumungsmittelhaltige Harzschicht oder eine Laminatfolie, umfassend eine aufschäumungsmittelhaltige Harzschicht, ist.

11. Aufbringungsverfahren, umfassend das Anhaften der Laminatfolie oder der aufgeschäumten Laminatfolie nach einem der Ansprüche 1 bis 6 an eine mit einem Haftmittel beschichtete Aufbringungsoberfläche.

12. Aufbringungsverfahren, umfassend das Beschichten der Rückseite der Laminatfolie oder aufgeschäumten Laminatfolie nach einem der Ansprüche 1 bis 6 mit einem Haftmittel und dann das Anhaften der Folie an eine Aufbringungsoberfläche.

13. Aufbringungsverfahren nach Anspruch 11 oder 12, wobei die Aufbringungsoberfläche eine Wandoberfläche und/oder eine Raumdecke ist.

## Revendications

1. Feuille stratifiée comprenant un matériau de base fibreux et au moins une couche de résine sur le matériau de base fibreux, le matériau de base fibreux comprenant un produit réticulé d'un matériau de réticulation par rayonnement ionisant.

2. Feuille stratifiée selon la revendication 1, dans laquelle la couche de résine est une couche de résine d'oléfine.

3. Feuille stratifiée selon la revendication 1 ou 2, dans laquelle la couche de résine est une couche de résine contenant un agent d'expansion, ou une couche stratifiée comprenant une couche de résine contenant un agent d'expansion.

4. Feuille stratifiée selon la revendication 3, dans laquelle la couche de résine contenant un agent d'expansion présente une couche de résine non expansée formée sur un ou les deux côtés de celle-ci.

5. Feuille stratifiée selon la revendication 3 ou 4, dans laquelle la résine de la couche de résine contenant un agent d'expansion est réticulée par irradiation avec un faisceau d'électrons.

6. Feuille stratifiée expansée obtenue par l'expansion de la couche de résine contenant un agent d'expansion de la feuille stratifiée selon l'une quelconque des revendications 3 à 5.

7. Procédé pour produire une feuille stratifiée, comprenant la réalisation des étapes (1) et (2) suivantes dans n'importe quel ordre :
(1) la formation d'au moins une couche de résine sur un matériau de base fibreux,
(2) l'imprégnation du matériau de base fibreux avec un matériau de réticulation par rayonnement ionisant ; puis
l'irradiation d'au moins le matériau de base fibreux avec un rayonnement ionisant pour réticuler le matériau de réticulation par rayonnement ionisant, formant ainsi un produit réticulé.

8. Procédé selon la revendication 7, dans lequel au moins la couche de résine est formée sur le matériau de base fibreux par le biais d'une formation de film par extrusion.

9. Procédé pour produire la feuille stratifiée selon la revendication 7 ou 8, dans lequel la couche de résine est une couche de résine contenant un agent d'expansion, ou une couche stratifiée comprenant une couche de résine contenant un agent d'expansion, le rayonnement ionisant est un faisceau d'électrons, et la réticulation du matériau de réticulation par rayonnement ionisant et la réticulation de la résine de la couche de résine contenant un agent d'expansion sont réalisées simultanément par irradiation avec le faisceau d'électrons.

10. Procédé pour produire une feuille stratifiée expansée, comprenant du chauffage pour expanser une couche de résine contenant un agent d'expansion de la feuille stratifiée produite par le procédé de production selon l'une quelconque des revendications 7 à 9, la couche de résine étant une couche de résine contenant un agent d'expansion ou une couche stratifiée comprenant une couche de résine contenant un agent d'expansion.

11. Procédé d'application comprenant l'adhérence de la feuille stratifiée ou feuille stratifiée expansée selon l'une quelconque des revendications 1 à 6 à une surface d'application revêtue d'un adhésif.

12. Procédé d'application comprenant le revêtement de la face arrière de la feuille stratifiée ou feuille stratifiée expansée selon l'une quelconque des revendications 1 à 6 avec un adhésif puis l'adhérence de la feuille à une surface d'application.

13. Procédé d'application selon la revendication 11 ou 12, dans lequel la surface d'application est une face murale et/ou un plafond.
